# EUROPEAN PATENT APPLICATION

(11) **EP 2 428 498 A1**
(43) Date of publication of application: **14.03.2012**
(21) Application number: 11156173.4
(22) Date of filing: 28.02.2011
(51) Int. Cl.: C03C 25/10, G02B 6/44, C08G 18/48, C08G 18/67, C08L 75/16, C09D 175/16

(54) **Curable liquid resin composition for outermost covering layers of optical fiber line**

(30) Priority: 13.09.2010 JP 2010204254
(71) Applicant: DSM IP Assets B.V., 6411 TE Heerlen (NL); JSR Corporation, Tokyo 105-8640 (JP)
(72) Inventor: Uchida, Hirofumi, Minato-ku Tokyo 105-8640 (JP); Yamashita, Yuutoku, Minato-ku Tokyo 105-8640 (JP); Kurosawa, Takahiko, Minato-ku Tokyo 105-8640 (JP)
(74) Representative: Jansen, Cornelis Marinus

(57) **Abstract**

This invention is a material for coating the outermost layer of optical fiber lines having excellent ability to withstand external stress such as friction or bending with respect to other optical fiber lines or cable coatings, low adhesion between optical fiber lines, and excellent transparency. The composition includes the following components (A), (B), (C), and (D);
(A) 30-90 wt.% of total mass urethane (meth)acrylates having structures derived from polyols having aliphatic structures as well as structures derived from polyols having aromatic structures or alicyclic structures, and;
(B) 1-60 wt.% of total mass compounds other than urethane (meth)acrylate having ethylene unsaturated radicals, and;
(C) 0.1-10 wt.% of total mass polymerization initiator, and;
(D) 0.1-10 wt.% of total mass silicone compounds of number-average molecular weight 1000 to 30 000 g/mol.

## Description

The present invention relates to a curable liquid resin composition for outermost covering layers of optical fiber line.

Optical fiber lines having a structure with a soft flexible primary covering layer on the surface for the purpose of retaining glass fibers of quartz *etc.,* and a secondary covering layer with high rigidity on the outside thereof, are known. Also, in some cases a colored layer (also called an ink layer) is placed on the outside of the second covering layer for purposes of identification. In addition, in order to make optical fiber lines with such covering layers practical, optical fiber tapes are known, whereby a number are laid on a flat surface and fixed with a binding material and then a tape-like covering layer is applied. A resin composition for the purpose of forming a first covering layer is called a soft material, a resin composition for the purpose of forming a second covering layer is known as a hard material, and a resin composition for the purpose of forming a tape-like covering layer is called a tape material.

Further, the outer diameter of an optical fiber line is approximately 250 µm, but in order to improve ease of manual handling, a separate layer of resin coating is applied to enlarge the outer diameter to around 500 to 900 µm. Such a resin coating layer is normally called an "upjacket layer."

Widely used resin coating methods for these uses include coating with a curable liquid resin composition and then curing with heat or light, particularly UV light.

Also, applications that bring optical fiber into general households (abbreviated FTTH from the initials "Fiber To The Home"), require large numbers of optical fiber lines to be bound into optical cables, and therefore an appropriate degree of durability is required in terms of strength and total elongation in order to handle external stress such as friction or bending between one optical fiber lines and another optical fiber line or the outer cable covering. For this reason, previously a great number of measures have been reported whereby the outermost layer of optical fiber lines have been coated to around 500 to 900 µm with a covering layer of thermoplastic resin such as nylon with outstanding durability characteristics (see Japanese Patent Announcement H9 (1997)-197205, Japanese Patent Announcement 2005-4031 and Japanese Patent Announcement 2005-283624).

Also, there have been reports of curable liquid resin compositions blended with a mixture of urethane (meth)acrylate obtained using polyether polyol having propylene oxide as an element and urethane (meth)acrylate obtained by using polyether polyol having ring structures, as a second layer covering material or tape material for optical fiber lines having high flexibility and high elongation (see Japanese Patent Announcement 2003-246826). And in addition there have been reports of curable liquid resin compositions of a mixture of urethane (meth)acrylate obtained using aliphatic polyether polyol and urethane (meth)acrylate obtained using ring type polyether polyol, blended with denatured silicone and used as optical fiber tape material with excellent surface slipperiness and printability (see Japanese Patent Announcement 2009-227988).

However, prior compositions have not been fully satisfactory from aspects such as ease of production of optical fiber and curing speed, and also having mechanical properties such as appropriate hardness and total elongation with respect to external stress from friction and bending *etc.* against other optical fiber lines or cable outer coverings *etc*. Thus, it would be desirable for an outermost layer covering material for optical fiber lines having reduced mutual adhesion (improved surface slipperiness) when multiple optical fiber lines are wound on bobbins *etc.* and also having excellent transparency for the purpose of visually distinguishing between colors of ink layers identifying optical fiber lines bound together in various optical cables and optical fiber tapes to be made available.

In a first aspect, the invention is directed to a curable liquid resin composition for outermost covering layers of optical fiber line, comprising, of 100 wt.% total mass, the following components (A), (B), (C), and (D):
(A) 30-90 wt.% urethane (meth)acrylates having structures derived from polyols having aliphatic structures as well as structures derived from polyols having aromatic structures or alicyclic structures, and;
(B) 1-60 wt.% compounds other than urethane (meth)acrylate having ethylene unsaturated radicals, and;
(C) 0.1-10 wt.% polymerization initiator, and;
(D) 0.1-10 wt.% silicone compounds having number-average molecular weight of 1000 to 30 000 g/mol.

In a further aspect, the invention is directed to a curable liquid resin composition for outermost covering layers of optical fiber line according to the invention, whereby the molar ratio of structures derived from polyols having aliphatic structures to structures derived from polyols having aromatic structures or alicyclic structures according to component (A) is 0.5:2 to 2:0.5.

In a further aspect, the invention is directed to a curable liquid resin composition for outermost covering layers of optical fiber line according to the invention, whereby in component (A), polyols having aliphatic structure have molecular weight 700 to 2000 g/mol, and polyols having aromatic structures or alicyclic structures have molecular weight 300 to 1000 g/mol.

In a further aspect, the invention is directed to a curable liquid resin composition for outermost covering layers of optical fiber line according to the invention, whereby in component (A), polyols having aliphatic structures are ether polyols.

In a further aspect, the invention is directed a curable liquid resin composition for outermost covering layers of optical fiber line according to the invention, whereby in component (A), polyols having aromatic structure or alicyclic structure are polyols having bisphenolic structure.

In yet a further aspect, the invention is directed to a curable liquid resin composition for outermost covering layers of optical fiber line according to the invention, whereby component (B), of 100 wt.% total mass of compounds other than urethane (meth)acrylate having ethylene unsaturated radicals, is no less than 90 wt.% (B1) polymerizable monofunctional compounds.

In a further aspect, the invention is directed to the a curable liquid resin composition for outermost covering layers of optical fiber line according to the invention, whereby in component (D), silicone compounds of average molecular weight 1000 to 30 000 g/mol are silicone compounds having dimethyl polysiloxane structure.

In yet a further aspect, the invention is directed to an outer coating for optical fiber lines obtained by curing a curable liquid resin composition according to the invention.

In a further aspect, the invention is directed to an optical fiber line having an outer coating according to the invention.

The invention provides a material for the outermost covering layer of optical fiber lines having excellent durability with respect to external stress from friction with other optical fiber lines and cable coverings as well as bending *etc.,* low mutual adhesion between optical fiber lines, and excellent transparency.

Accordingly, the inventors, in investigating the durability of curable liquid resin compositions as covering layers for optical fiber lines, have discovered that this purpose can be achieved by blending a urethane (meth)acrylate having a structure derived from polyols having aliphatic {flexible} structures and a structure derived from polyols having aromatic {rigid} structures with a silicone compound having a given molecular weight.

The present invention provides a curable liquid resin compound for outermost covering layer of optical fiber lines comprising, of 100 wt.% total mass, the following components (A), (B), (C), and (D):
(A) 30-90 wt.% urethane (meth) acrylates having structures derived from polyols having aliphatic structures as well as structures derived from polyols having aromatic structures or alicyclic structures, and;
(B) 1-60 wt.% compounds other than urethane (meth) acrylate having ethylene unsaturated radicals, and;
(C) 0.1-10 wt.% polymerization initiator, and;
(D) 0.1-10 wt.% silicone compounds of average molecular weight 1000 to 30 000 g/mol.

In addition, the present invention provides an outermost covering layer for optical fiber lines obtained by curing of said curable liquid resin composition, as well as an optical fiber line having the same.

A covering layer obtained by a curable liquid resin composition according to the present invention has excellent productivity and durability in terms of appropriate strength and total elongation, low mutual adhesion between optical fiber lines, and excellent transparency. It is an ideal material for forming the outer layer, or in other words the upjacket layer, of optical fiber lines.

Component (A) used in the present invention is a urethane (meth)acrylate having structures derived from polyols having aliphatic structures as well as structures derived from polyols having aromatic structures or alicyclic structures. Polyols having aliphatic structures are flexible in structure, and therefore are able to form cured objects with excellent total elongation. On the other hand, polyols having aromatic structures or alicyclic structures are rigid in structure, and therefore are able to increase the Young's coefficient of cured objects.

Thus by being a urethane (meth)acrylate having structures derived from polyols having flexible structures and structures derived from polyols having rigid structures in one molecule, it is possible to improved mutual solubility in component (D), as well as to obtain cured products with exceptional transparency.

Note also that a polyol with added alkylene oxide of bisphenol A may also be referred to as having a rigid component part derived from bisphenol A having an aromatic structure and as having a flexible structural part derived from alkylene oxide having an aliphatic structure. In the present invention, in the case of a polyol having a rigid structure and a flexible structure within the same molecule, if the molecular weight of the flexible structural part is not more than 300 g/mol, then the entire structure derived from this polyol may be considered a structure derived from polyol having a rigid structure in terms of component (A).

Specifically, Uniol DB-400 (manufactured by NOF Corporation) is a diol of molecular weight 400 as expressed in formula (**0**) below. Therefore, in terms of component (A), the structure derived from DB-400 is treated in its entirety as a structure derived from a polyol having a rigid structure.

HO-(C₃H₆O)ₙ-Ph-C(CH₃)₂-Ph- (C₃H₆O)ₙ-OH (**0**)

In Formula (**0**) Ph represents a phenyl radical, and n represents a number of iterations.

A composition according to the present invention is able to provide cured objects having both exceptional total elongation and high Young's coefficient, by means of blending urethane (meth)acrylate having structures derived from polyols having flexible structures as well as structures derived from polyols having rigid structures.

(A) A urethane (meth)acrylate having structures derived from polyols having aliphatic structures as well as structures derived from polyols having aromatic structures or alicyclic structures is manufactured by reacting, for example, a polyol having aliphatic structure, a polyol having aromatic structures or alicyclic structures, with a diisocyanate and a (meth)acrylate having hydrogen radicals. Specifically, it is manufactured by reacting the isocyanate radicals in the isocyanate respectively with the hydrogen radicals in the polyol and the hydrogen radicals of (meth)acrylate having hydrogen radicals.

Methods for this reaction include, for example, a method of reacting the polyol, diisocyanate and (meth)acrylate having hydrogen radicals together at once; a method of reacting the polyol and diisocyanate, then reacting with the (meth)acrylate having hydrogen radicals; a method of reacting the diisocyanate and (meth)acrylate having hydrogen radicals, then reacting with the polyol; a method of reacting the diisocyanate and (meth)acrylate having hydrogen radicals, and then reacting with the polyol, and lastly reacting with (meth)acrylate having hydrogen radicals, *etc.* In particular, methods of reacting the polyol and diisocyanate, then reacting with the (meth)acrylate having hydrogen radicals are preferred.

Note also that in the present invention two types of polyols are used, namely polyols having aliphatic structures, and polyols having either aromatic structures or alicyclic structures, and the reacting of these two types of polyols with diisocyanate may be done with both types at once, or by reacting either polyol with diisocyanate first, and then reacting by adding the other polyol.

Next we describe the polyols, diisocyanate, and (meth)acrylate having hydrogen radicals used in manufacturing urethane (meth)acrylate according to component (A).

Polyols having aliphatic structure include, for example, polyether polyols, polyester polyols, polycarbonate polyols, polycaprolactone polyols, as well as the other polyols. Polyether polyols include, for example, polyethylene glycol, polypropylene glycol, polytetramethylene glycol, polyhexamethylene glycol, polyheptamethylene glycol, polydecamethylene glycol, or polyether polyols obtained by ring-opening co-polymerization of two or more types of ion polymerizable cyclic compounds. The aforementioned ion polymerizable cyclic compounds include, for example, ethylene oxide, propylene oxide, butane-1-oxide, butene 1-oxide, isobutene oxide, 3,3-bischloromethyloxytane, tetrahydrofuran, 2-methyltetrahydrofuran, 3-methyltetrahydrofuran, dioxane, trioxane, tetraoxane, cyclohexene oxide, styrene oxide, epichlorhydrine, glycidyl methacrylate, aryl glycidyl ether, aryl glycidyl carbonate, butadiene mono oxide, isoprene monoxide, vinyl oxycetane, vinyl tetrahydrofuran, vinyl cyclohexene oxide, phenyl glycidyl ether, butyl glycidyl ether, glycidyl ether benzoate, *etc*. Also, the aforementioned ion polymerizable cyclic compounds may be used together with cyclic imides such as ethylene imines, β-propiolactone, cyclic lactones such as glycolic acid lactide, or dimethyl cyclopolysiloxanes as polyether polyols obtained by ring-opening co-polymerization. Specific combinations of the aforementioned two or more types of ion-polymerizable cyclic compounds include, for example, tetrahydrofuran and propylene oxide, tetrahydrofuran and 2-methyltetrahydrofuran, tetrahydrofuran and 3-methyl tetrahydrofuran, tetrahydrofuran and ethylene oxide, propylene oxide and ethylene oxide, 1-butene oxide and ethylene oxide, a 3-way combination of tetrahydrofuran, 1-butene oxide, and ethylene oxide, *etc.* Such ring-opening co-polymers of ion-polymerizable ring compounds may also be combined at random, or combined in blocks.

Said aliphatic polyether polyols may be obtained as commercially available products and include, for example, PTMG 650, PTMG 1000, PTMG 2000 (the foregoing manufactured by Mitsubishi Chemical industries), PPG-400, PPG 1000, PPG 2000, PPG 3000, EXCENOL 720, 1020, 2020 (the foregoing manufactured by Alacra, Inc. (Asahi Glass Urethane)), PEG 1000, Unisave DC 1100, DC 1800 (the foregoing manufactured by NOF Corporation), PPTG 2000, PPTG 1000, PTG 400, PTGS 2000 (the foregoing manufactured by Hodogaya Chemical Co., Ltd.), Z-3001-4, Z-3001-5, PBG 2000A, PBG 2000B (the foregoing manufactured by Daiichi Kogyo Seiyaku Co., Ltd.) *etc.* Also, diols that are copolymers of 1-butene oxide and ethylene oxide may be obtained as commercially available products including EO/BO 500, EO/BO 1000, EO/BO 2000, EO/BO 3000, EO/BO 4000 (the foregoing manufactured by Daiichi Kogyo Seiyaku).

Aliphatic polyester polyols include, for example, polyester polyols obtained by reacting a divalent alcohol with a dibasic acid. The aforementioned divalent alcohols may include for example ethylene glycol, polyethylene glycol, propylene glycol, polypropylene glycol, tetramethylene glycol, polytetramethylene glycol, 1,6-hexane polyol, neopentyl glycol, 3-methyl-1,5-pentane polyol, 1,9-nonane polyol, 2-methyl-1,8-octane polyol, *etc.*, Dibasic acids may include for example, phthalic acid, isophthalic acid, terephthalic acid, maleic acid, fumaric acid, adipic acid, sebacic acid, *etc.* Commercially available products include Kurapol P-2010, P-2050, PMIPA, PKA-A, PKA-A2, PNA-2000 (the foregoing manufactured by Kuraray, Ltd.).

Also, aliphatic polycarbonate polyols include for example polycarbonates of polytetrahydrofuran, polycarbonates of 1,6-hexane polyol, *etc.*, and may be obtained as commercially available products including DN-980, 981, 982, 983 (the foregoing manufactured by Nippon Polyurethane Industry Co., Ltd.), and PC-THF-CD (manufactured by BASF).

Further, aliphatic polycaprolactone polyols include, for example, divalent polyols such as ethylene glycol, propylene glycol, tetramethylene glycol, 1,2-polybutylene glycol, 1.6-hexane polyol, neopentyl glycol, 1,4-cyclohexane dimethanol, 1,4-butane polyol, *etc.* or polymers thereof, and polycaprolactone polyols obtained by reaction with *ε*-caprolactone. Said polyols may be obtained as commercially available products including Praxel 205, 205AL, 212, 212AL, 220, 220AL (the foregoing manufactured by Daicel Chemical Industries, Ltd.).

Polyols having said aliphatic structures may be used singly or in combinations of two or more.

Polyols including aromatic structures or alicyclic structures may include, for example, polyols having bisphenolic structure such as polyols with added bisphenol A, bisphenol F, or alkylene oxide of bisphenol A, polyols with added hydrogenated bisphenol A, hydrogenated bisphenol F, or alkylene oxide of hydrogenated bisphenol A, polyols with added alkylene oxide of hydrogenated bisphenol F, polyols with added alkylene oxide of bisphenol F, *etc*.; polyols with added alkylene oxide of hydroquinone, polyols with added alkylene oxide of naphthohydroquinone, polyols with added alkylene oxide of anthrahydroquinone, polyol with 1,4-cyclohexane polyol or polyols with other alkylene oxide, tricyclodecane polyol, tricyclodecane dimethanol, pentacyclopentadecane polyol, pentacyclopentadecane dimethanol, polyol with added xylene oxide, polyol with added alkylene oxide of 1,4-cyclohexane polyol, 1,4-cyclohexane dimethanol, dicyclopentadiene dimethylol compounds, tricyclodecane dimethanol *etc.* Of these, polyols having bisphenolic structures such as polyols with added alkylene oxide of bisphenol A are particularly preferred. The foregoing polyols may be obtained as commercially available products including Uniol DA 400, DA 700, DA 1000, DB 400 (the foregoing manufactured by NOF Corporation).

The aforementioned polyols having aromatic structures or alicyclic structures may be used singly or in combinations of two or more.

Further, the arithmetic mean molecular weight of polyols having aliphatic structures is not specifically limited but is preferably between 700 and 2000 g/mol, and more preferably between 700 and 1500 g/mol. The arithmetic mean molecular weight of polyols having aromatic structures or alicyclic structures is preferably between 300 and 1000 g/mol, and more preferably between 300 and 800 g/mol. As long as the molecular weights are within the above ranges, it is possible to obtain appropriate Young's coefficients for the outer layer of optical fiber lines. Note also that arithmetic mean molecular weights are derived from the value of the hydrogen radical, and the value of the hydrogen radical is measured in accordance with the standards of JIS-K0070.

Diisocyanates may include, for example, diisocyanates having aromatic ring structures such as 2,4-toluene diisocyanate, 2,6-toluene diisocyanate, 1,3-xylene diisocyanate, 1,4-xylene diisocyanate, 1,5-naphthalene diisocyanate, m-phenylene diisocyanate, p-phenylene diisocyanate, 3,3'-methyl-4,4'-diphenylmetane diisocyanate, 4,4'-dipenylmethanediisocyanate, 3,3'-dimethlene phenyl diisocyanate, 4.4'-biphenylene diisocyanate, 4-diphenyl propane diisocyanate, tetramethyl xylene diisocyanate *etc*.; diisocyanates having alicyclic structures such as isophorone diisocyanate, hydrogenated diphenylmethane diisocyanate, hydrogenated xylene diisocyanate, 2,5 (or 2,6)-bis(isocyanate methyl)-bicycle[2.2.1] heptane, *etc*.; diisocyanates having aliphatic structures such as 1,6-hexane diisocyanate, methylene bis(4-cyclehexyl diisocyanate), 2,2,4-trimethylkexamethylene diisocyanate, bis(2-diisocyanate ethyl) fumarate, 6-isopropyl-1,3-phenyl diisocyanate, lysine diisocyanate *etc.* Of these, diisocyanates having aromatic ring structures, and diisocyanates having alicyclic structures are preferred, and 2,4-toluene diisocyanate, isophorone diisocyanate, xylene diisocyanate, and methylene bis(4-cyclohexyl diisocyanate) are particularly preferred. The aforementioned diisocyanates may be used singly or in combinations of two or more.

(Meth)acrylates having hydrogen radicals may include, for example, 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butane polyol mono(meth)acrylate, 2-hydroxyalkyl (meth)acryloyl phosphate, 4-hydroxycyclohexyl (meth)acrylate, 1,6-hexanepolyol mono(meth)acrylate, neopentylcyclol mono(meth)acrylate, trimethylolpropane di(meth)acrylate, trimethylolethane di(meth)acrylate, pentaerythritol tri(meth)acrylate, dipentaerythritol penta(meth)acrylate, and the (meth)acrylates shown in Formula (**1**) or (**2**) below:

H₂C=C(R¹)-COOCH₂CH₂-(OCOCH₂CH₂CH₂CH₂CH₂)ₙ-OH (**1**)

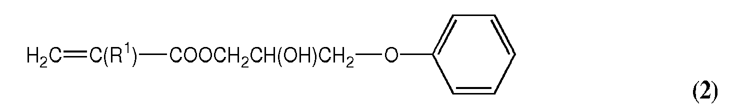

wherein R¹ represents a hydrogen atom of methyl radical, and n represents a number from 1 to 15). In addition, compounds having glycidyl radicals such as alkyl glycine ether, aryl glycine ether, glycyl (meth)acrylate *etc.,* as well as compounds obtained from addition reactions with (meth)acrylic acid, may be used. Of said (meth)acrylates having hydrogen radicals, 2-hydroxyethyl (meth)acrylate and 2-hydroxypropyl (meth)acrylate are particularly preferable.

Said (meth)acrylates having hydrogen radicals may be used singly or in combinations of two or more.

The molar ratio of structures derived from polyols having aliphatic structures to structures derived from polyols having aromatic structures or alicyclic structures according to component (A) is preferably from 0.5:2 to 2:0.5, and more preferably from 0.8:1.5 to 1.5:0.8.

The proportions of polyols, diisocyanates, and (meth)acrylates having hydrogen radicals used in manufacturing urethane (meth)acrylate according to component (A) are preferably 1.1 to 3 equivalent weight of isocyanate radicals in isocyanates, and 0.2 to 1.5 equivalent weight of hydrogen radicals in (meth)acrylate having hydrogen radicals per 1 equivalent weight of hydrogen radicals in polyols.

In reacting said compounds, a urethane-forming catalyst such as copper naphthenate, cobalt naphthenate, zinc naphthenate, dibutyl tin dilaurate, triethylamine, 1,4-diazabicyclo[2.2.2]octane, 2,6,7-trimethyl-1,4-diazabicyclo[2.2.2]octane *etc.* should be used preferably in a ratio of 0.01 to 1 parts by weight per 100 parts total weight of reactants. Also, the reaction temperature is normally from 10 to 90 °C and preferably from 30 to 80 °C.

Urethane (meth)acrylate according to component (A) should account for 30 to 90 % by weight, preferably 40 to 80 % by weight, and more preferably 45 to 70 % by weight of all components of a curable liquid resin composition according to the present invention. If less than 30 % by weight, total elongation is substantially reduced, and if greater than 90 % by weight, the viscosity of the curable liquid resin composition will be high.

Component (B) used in a composition according to the present invention is a compound(s) other than urethane (meth)acrylate having ethylene unsaturated radicals. Component (B) may be (B1) a compound(s) having one ethylene unsaturated radicals ("polymerizable monofunctional compound") or (B2) a compound having two or more ethylene unsaturated radicals ("polymerizable multifunctional compound"). In component (B), either (B1) polymerizable monofunctional compounds or (B2) polymerizable multifunctional compounds may be used singly, or both (B1) polymerizable monofunctional compounds and (B2) polymerizable multifunctional compounds may be used in combination.

Polymerizable monofunctional compounds according to (B1) may include, for example, lactams having vinyl radicals such as N-vinylpyrolidone, N-vinyl prolactam *etc*.; (meth)acrylates having alicyclic structures such as isobornyl (meth)acrylate, bornyl (meth)acrylate, tricyclodecanyl (meth)acrylate, dicyclopentanyl (meth)acrylate, 4-butyl cyclohexyl (meth)acrylate, or (meth)acrylates expressed by Formula (**4**) or Formula (**5**) below; or (meth)acrylates having aromatic structures such as benzyl (meth)acrylate, phenoxyethyl (meth)acrylate, (meth)acrylates expressed by Formula (6) below, acryloyl morpholine, vinyl imidazole, vinyl pyridine *etc.* (in the present invention (meth)acrylates having multi-element aromatic structures are treated as (meth)acrylates having aromatic structures.) Also, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, butyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, butoxyethyl(meth)acrylate, ethoxydiethylene glycol (meth)acrylate, polyethylene glycol mono(meth)acrylate, polypropylene glycol mono(meth)acrylate, methoxyethylene glycol (meth)acrylate, ethoxyethyl (meth)acrylate, methoxy polyethylene glycol(meth)acrylate, methoxy polypropylene glycol (meth)acrylate, diacetone (meth)acrylamide, isobutoxymethyl (meth)acrylamide, N,N-dimethyl (meth)acrylamide, t-octyl (meth)acrylamide, dimethyl aminoethyl (meth)acrylate, diethyl aminoethyl (meth)acrylate, 7-amino-3,7-dimethyloctyl (meth)acrylate, N,N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether, or compounds expressed by Formula (3) below, may be used. 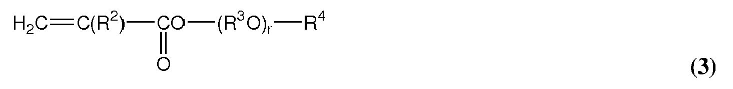 wherein R² represents a hydrogen atom or methyl group, R³ represents 2 to 6 carbons and preferably 2 to 4 alkylene groups, R⁴ represents a hydrogen atom or 1 to 12 carbons and preferably 1 to 9 alkyl groups, and r represents a number from 0 to 12 and preferably is an integer from 1 to 8. 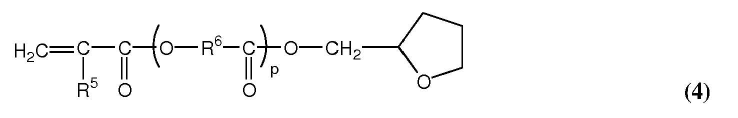 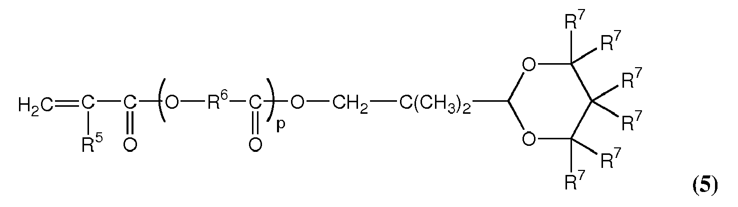 wherein R⁵ represents a hydrogen atom or methyl group, R⁶ represents 2 to 8 carbons and preferably 2 to 5 alkylene groups, R⁷ represents a hydrogen atom or methyl group at each position, and p represents an integer from 1 to 4. 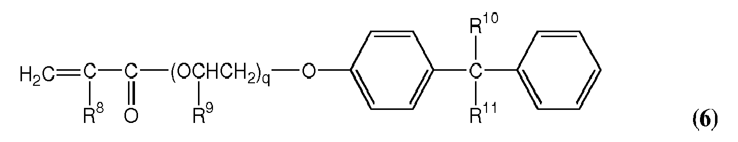 wherein R⁸, R⁹, R¹⁰, and R¹¹ represent mutually independent hydrogen atoms or methyl groups, and q is an integer from 1 to 5.

Said polymerizable monofunctional compounds according to (B1) may be used singly or in combinations of two or more.

Of said polymerizable monofunctional compounds according to (B1), (meth)acrylates having alicyclic structures and (meth)acrylates having aromatic structures are preferred for the capability of increasing the Young's coefficient of the cured object, and of these isobornyl (meth)acrylate is particularly preferable. Also, lactams having vinyl radicals such as N-vinylpyrolidone, N-vinyl prolactam, *etc.* are preferred for the purpose of increasing the curing rate.

Commercially available products that may be used as said polymerizable monofunctional compounds include IBXA (manufactured by Osaka Organic Chemical Industry, Ltd.), and Aronix M-111, M-113, M-114, M-117, TO-1210 (the foregoing manufactured by Toagosei Co., Ltd.), *etc.*

Said component (B1) should account for 1 to 60 % by weight, preferably 10 to 55 %, by weight, and more preferably 20 to 50 % by weight of all components of a curable liquid resin composition according to the present invention.

Also, polymerizable multifunctional compounds according to (B2) may include, for example, trimethylol propane tri(meth)acrylate, trimethylol propane trioxyethyl(meth)acrylate, pentaerythritol tri(meth)acrylate, triethylene glycol diacrylate, tetraethylene glycol di(meth)acrylate, tricyclodecane dimethylol diacrylate, 1,4-butane polyol di(meth)acrylate, 1,6-hexane polyol di(meth)acrylate, neopentyl glycol di(meth)acrylate, tripropylene glycol di(meth)acrylate, bisphenol A diglycidyl ether two-end (meth)acrylate adduct, pentaerithritol tri(meth)acrylate, pentaerithritol tetra(meth)acrylate, polyester di(meth)acrylate, tris(2-hydroxyethyl) isocyanurate tri(meth)acrylate, tris(2-hydroxyethyl) isocyanurate di(meth)acrylate, polyol di(meth)acrylates of ethylene oxide or propylene oxide adducts of bisphenol A, polyol di(meth)acrylates of ethylene oxide or propylene oxide adducts of hydrogenated bisphenol A, epoxy (meth)acrylate with added diglycidine ether (meth)acrylate of bisphenol A, triethylene glycol divinyl ethers, and compounds represented by Formula (7) below: 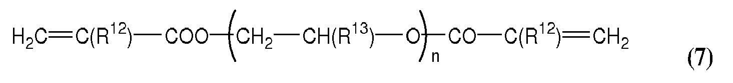 wherein R¹² and R¹³ are mutually independent hydrogen atoms or methyl groups, and n is an integer from 1 to 100.

Said polymerizable multifunction compounds according to (B2) may be used singly or in combinations of two or more.

Of said polymerizable multifunction compounds according to (B2), triethylene glycol diacrylate, tetraethylene glycol di(meth)acrylate, tricyclodecane dimethylol diacrylate, tripropylene glycol di(meth)acrylate, polyester di(meth)acrylate, polyol di(meth)acrylates of ethylene oxide or propylene oxide adducts of bisphenol A, and polyol di(meth)acrylates of ethylene oxide or propylene oxide adducts of hydrogenated bisphenol A are preferred.

Said component (B2) should account for 0 to 20 % by weight, preferably 0 to 10 % by weight, and more preferably 0 to 5 % by weight of all components of a curable liquid resin composition according to the present invention. If greater than 20 % by weight, the bridging density of the cured product becomes excessive and thus the Young's coefficient of the cured object is excessive, and also in some cases the total elongation is excessively small.

Also, taking the total weight of component (B) as 100 % by weight, polymerizable monofunctional compound according to (B1) is preferably not less than 90 % by weight, more preferably not less than 95 % by weight, and particularly preferably 100 % by weight.

Said component (B) as the total of components (B1) and (B2), should account for 1 to 60 % by weight, preferably 10 to 55 %, and more preferably 20 to 50 % of all components of a curable liquid resin composition according to the present invention.

In addition, a curable liquid resin composition according to the present invention contains a polymerization initiator as component (C). Either a thermal polymerization initiator or an optical polymerization initiator may be used as a polymerization initiator.

Normally thermal polymerization initiators such as peroxides or azo compounds are used when a curable liquid resin composition according to the present invention is a thermal curing type. Specifically these may be benzoyl peroxide, t-butyl-oxybenzoate, azobisisobutylonitrile, *etc.*

Also, when a curable liquid resin composition according to the present invention is an optical curing type, photo polymerization initiators are used, and the use of photosensitizers as needed is preferable. Optical polymerization initiators as used here may include, for example, 1-hydroxycyclohexyl phenylketone, 2,2-dimethoxy-2-phenyl acetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoene propyl ether, benzoene ethyl ether, benzyl dimethyl ketal, 1-(4-isopropylphenyl)-2-hydroxy-2-methyl propane-1-one, 2-hydroxy-2-methyl-1-phenylpropane-1-one, thioxantone, diethylthioxantone, 2-isopropylthioxantone, 2-chlorothioxantone, 2-methyl-1-4-methylthio)phenyl]-2-morpholino-propane-1-one, 2,4,6-trimethylbenzoyldiphenylphosphine oxide, bis-(2,6-dimethoxybenzoyl)-2,4,4-trimethylpentyl phosphine oxide; IRGACURE 184, 369, 651, 500, 907, CGI 1700, CGI 1750, CGI 1850, CG24-61; Darocure 1116, 1173 (the foregoing manufactured by Chiba Specialty Chemicals, Ltd.), Lucirin TPO (manufactured by BASF; Ebecryl P36 (manufactured by UCB), *etc.*

Also, photosensitizers may include, for example, triethylamine, diethylamine, N-methyl diethanol amine, ethanol amine, 4-methyl amino benzoic acid, 4-dimethylamino methyl benzoate, 4-dimethylamino ethyl benzoate, 4-dimethylamino isoamyl benzoate; and Ebecryl P102, 103, 104, 105 (the foregoing manufactured by UCB), *etc.*

When a curable liquid resin composition according to the present invention is cured by concomitant use of heat and UV rays, the aforementioned thermal polymerization initiators and photo polymerization initiators may be used together. Component (C) should account for 0.1 to 10 % by weight, preferably 0.5 to 8 % by weight, and more preferably 1 to 5 % by weight of all components of a curable liquid resin composition according to the present invention.

A curable liquid resin composite according to the present invention contains (D) silicone compounds having number-average molecular weight 1000 to 30 000 g/mol. The use of said component (D) can improve the surface slipperiness of the outermost layer of optical fiber lines. Also, mutual solubility of component (D) in the cured object is necessary in order to provide an outermost layer of optical fiber lines with outstanding transparency. Cured objects with exceptional transparence can be obtained by means of the combination of component (D) and component (A). If the number-average molecular weight of component (D) is less than 1000 g/mol, sufficient transparency effects are not obtained, and if the number-average molecular weight exceeds 30 000 g/mol, the effect on surface slipperiness is not sufficient, and this also contributes to lowering of Young's coefficient. A number-average molecular weight of 1000 to 28 000 g/mol is more preferable, and 1000 to 25 000 g/mol is still more preferable. The number-average molecular weight of a silicone compound according to component (D) is the polystyrene-converted number-average molecular weight derived by the gel permeation chromatography method.

(D) silicone compounds may be either silicone compounds having no polymerizable groups such as ethylene unsaturated polymer groups, or silicone compounds having polymerizable groups such as ethylene unsaturated polymer groups, and preferably contain dimethyl polysiloxane structures. Specifically, polyether denatured silicone, alkyl denatured silicone, urethane acrylate denatured silicone, urethane denatured silicone, methyl stearyl denatured silicone, epoxy polyether denatured silicone, alkyl aralkyl polyether denatured silicone, *etc.* may be listed, and polyether denatured silicone is particularly preferable.

Preferable polyether denatured silicones are polydimethyl siloxane compounds wherein at least one phosphorus atom is bonded to a group R¹⁴-(R¹⁵O)ₛ-R¹⁶- (wherein R¹⁴ indicates a hydroxide group or an alkoxy group with 1 to 10 carbons, R¹⁵ indicates an alkylene group of 2 to 4 carbons and wherein R¹⁵ may be a mixture of two or more alkylene groups, R¹⁶ represents an alkylene group of 2 to 12 carbons, and s is a number from 1 to 20). Of these, ethylene groups and propylene groups are preferable for R¹⁵, and ethylene groups are particularly preferable.

Commercially available silicone compounds include for example SH28PA and SH-190; dimethylpolysiloxane-polyoxyalkylene copolymer (manufactured by Dow Corning Toray Co., Ltd.), [Peintad] 19, 54; dimethylpolysiloxane-polyoxyalkylene copolymer (manufactured by Dow Corning Toray Co., Ltd.), FM0411; Silaplane (manufactured by Chisso Corp.), SF8428; dimethyl polysilxane-polyoxyalkylene copolymer (containing side chain OH) (manufactured by Dow Corning Toray Co., Ltd.), BYK UV3510; dimethyl polysilxane-polyoxyalkylene copolymer (manufactured by BYK Chemie Japan), DC57; dimethylpolysiloxane-polyoxyalkylene copolymer (manufactured by Dow Coming Toray Co., Ltd.), Tego Rad 2300, 2200N; silicone polyether acrylate (manufactured by Tego Chemie), *etc.*

The foregoing (D) silicone compounds may be used either singly or in combinations of two or more types. From the standpoint of surface slipperiness and transparency of the outermost layer of optical fiber lines, component (D) should account for 0.1 to 10 % by weight, preferably 0.5 to 8 % by weight, and more preferably 0.8 to 6 % by weight of all components of a curable liquid resin composition according to the present invention.

In a curable liquid resin composition according to the present invention, additives of various types may be blended as necessary insofar as the characteristics of the present invention are not harmed, including for example, antioxidants, pigments, UV ray absorption agents, photostabilizers, silane coupling agents, thermal polymerization inhibitors, leveling agents, surfactants, preservative stabilizers, plasticizers, lubricants, solvents, fillers, anti-aging agents, wetting agents, coating improvement agents, *etc*.

A curable liquid resin composite according to the present invention may be cured by means of heat and/or radiation rays, wherein radiation rays may include infrared rays, visible light rays, ultraviolet rays, X-rays, electronic rays, α-rays, β-rays, γ-rays *etc.* By being cured in this manner said composite is ideal for outermost covering layers of optical fiber lines. For formation of outermost covering layers (upjacket layers) a covering of thickness 100 to 400 µm is preferable.

A curable liquid composition according to the present invention should preferably display viscosity at 25 °C of 1 to 20 Pa·s, and more preferably 1 to 10 Pa·s. Also, a coating obtained by curing a curable liquid composite according to the present invention should preferably display a Young's coefficient of 300 MPa to 800 MPa, and more preferably 300 to 600 MPa. Total elasticity should preferably be 150 to 300 %, and more preferably 160 to 200 %. Break strength should preferably be 1 to 70 MPa, and more preferably 1 to 60 MPa. Surface slipperiness should preferably be 2 to 15 N/cm², and more preferably 5 to 13 N/cm². Transparency (Hayes) should preferably be no greater than 3 %, and more preferably no greater than 2 %.

Next we will describe the present invention in detail in terms of examples, however the present invention is not limited to said examples whatsoever.

### Examples

### Manufacturing Example 1: Synthesis 1 of (A) urethane acrylate

30.0 g of isobornyl acrylate, 0.01 g of 2,6-di-t-butyl-p-cresol, 13.5 g of toluene diisocyanate, 26.4 g of polytetramethylene glycol with number-average molecular weight 1000 g/mol, and 10.6 g of an adduct of bisphenol A with ethylene oxide diol (NOF Corporation DA400) were placed in a reaction vessel equipped with an agitator, and agitated while being cooled to a liquid temperature of not more than 15 °C. After verifying the temperature of less than 15 °C, 0.02 g of dibutyl tin dilaurate was added and reacted while agitating for 2 hours, with the temperature controlled at not more than 60 °C. Next, 0.02 g of dibutyl tin dilaurate was added, and titration performed with 6.02 g of hydroxyethyl acrylate while taking care that the temperature did not exceed 60 °C, then after all titration was completed, the mixture was agitated for 2 hours at 65-70 °C. The reaction was ended when residual isocyanate was no greater than 0.1 % by weight. The resulting urethane (meth)acrylate is called UA1-1.

UA1-1 is a urethane acrylate having both structures derived from polytetramethylene glycol with number-average molecular weight 1000 g/mol that are flexible in structure, and structures derived from adduct of bisphenol A with ethylene oxide diol with number-average molecular weight 400 g/mol, that are rigid in structure. The molar ratio of polytetramethylene glycol having flexible structure and adduct of bisphenol A with ethylene oxide diol with rigid structure is 1:1.

### Manufacturing Example 2: Synthesis 1 of urethane acrylate not qualifying as Component (A)

0.24 g of 2,6-di-t-butyl-p-cresol, 272 g of 2,4-toluene diisocyanate, and 546 g of polytetramethylene glycol of number-average molecular weight 1000 g/mol were placed in a reaction vessel equipped with an agitator, and agitated while being cooled to a liquid temperature of not more than 15 °C. After adding 0.80 g of dibutyl tin dilaurate, the mixture was agitated for 1 hour such that the liquid temperature did not exceed 40 °C. During agitation, the mixture was cooled so as not to exceed 15 °C. Next, titration was performed with 181 g of hydroxyethyl acrylate while controlling the liquid temperature so as not to exceed 20 °C, and then reacted while agitating for 1 hour. After continuous agitating for 3 hours at 70 to 75 °C, the reaction was ended when residual isocyanate was no greater than 0.1 % by weight. The resulting urethane (meth)acrylate is called UA2-1.

### Manufacturing Example 3: (A) Synthesis 2 of urethane acrylate not qualifying as Component (A)

0.12 g of 2,6-di-*t*-butyl-*p*-cresol, 355 g of 2,4-toluene diisocyanate, and 0.24 g of dibutyl tin dilaurate were placed in a reaction vessel equipped with an agitator, and agitated while being cooled to a liquid temperature of not more than 15 °C. Next, titration was performed with 237 g of hydroxyethyl acrylate while controlling the liquid temperature so as not to exceed 20 °C, and then reacted while agitating in a hat water bath at 40 °C for 1 hour. Then the mixture was cooled to a liquid temperature of 20 °C, and 408 g of an adduct of bisphenol A with ethylene oxide diol (NOF Corporation DA400) was added. After verifying the release of heat, the mixture was agitated at 65 °C for 3 hours, and the reaction was ended when residual isocyanate was no greater than 0.1 % by weight. The resulting urethane (meth)acrylate is called UA2-2.

### Preferred Examples 1-2 and Comparative Examples 1-4

The components of the compositions shown in Table 1 were placed in a reaction vessel equipped with an agitator and agitated for 1 hour with temperature controlled at 50 °C, to yield curable liquid resin compositions.

### Test samples

Curable liquid resin compositions obtained according to the aforementioned preferred Examples and Comparative Examples were cured by the methods stated below, test samples were prepared and evaluated as described below. The results are shown together in Table 1. Blended quantities shown in Table 1 are percentages by weight.
(1) Viscosity:
Compositions were placed in a 25 °C constant temperature water bath for 30 minutes, then measured for viscosity using a B type viscosimeter.
(2) Young's coefficient:
Curable liquid resin compositions were coated onto glass panels using an applicator bar of thickness 250 µm, and cured in air by irradiation with UV rays at an energy level of 1 J/cm² to obtain film for measurement. From said film, samples were prepared in long strips such that the elongation part was 6 mm wide and 25 mm long, and pull testing performed at 23 °C temperature and 50 % relative humidity. The Young's coefficient was derived using resistance force at a pull rate of 1 mm/min and 2.5 % bend.
(3) Break strength and total elongation:
The break strength and total elongation of the aforementioned samples were measured under the measurement conditions stated below, using a tensile tester (AGS-50G, manufactured by Shimadzu Corporation).

| | |
|---|---|
| Pull speed: | 50 mm/minute |
| Index line spacing (measurement distance): | 25 mm |
| Measurement temperature: | 23 °C |
| Relative humidity: | 50 % RH |

(4) Surface slipperiness:
Preparation of test samples
   Curable liquid resin compositions were coated onto glass panels using an applicator bar of thickness 250 µm. These were cured by irradiation with UV rays at an energy level of 0.5 J/cm² in nitrogen. After the cured samples were adjusted to conditions of 23 °C and 50 % RH for not less than 12 hours, the cured samples were peeled from the glass plates and cut into test samples 3 centimeters in width.
Testing of surface slipperiness
   The surface of the aforementioned test samples that had been in contact with the glass plate was bonded to an aluminum plate, and fixed with two-sided adhesive tape. Using two such test samples, the surfaces of the cured samples were placed against each other, clamped with double clips, and used as surface slipperiness samples. Shear slip testing was performed using a pull speed of 50mm/min, contact surface area 5.4 cm² between cured surfaces, and acceleration by double clip 4.7 N/cm² and shear slip force was calculated from the load at which slipping began (unit: N/cm²).
(5) Transparency (Hayes):
Total visible light transparency of cured films was calculated according to JIS K7105, using a color Hayes meter (manufactured by Suga Test Instruments Co., Ltd.).

**Table 1**

| **Composition (part by weight)** | **Preferred Example 1** | **Preferred Example 2** | **Comparative Example 1** | **Comparative Example 2** | **Comparative Example 3** | **Comparative Example 4** |
|---|---|---|---|---|---|---|
| (A) UA1-1 | 58.8 | 55.0 | | | | |
| UA2-1 | | | 58.0 | | 29.4 | 42.0 |
| UA2-2 | | | | 58.0 | 29.4 | 16.8 |
| (B1) Isobornyl acrylate | 31.3 | 35.0 | 31.1 | 31.3 | 31.3 | 31.3 |
| (B1) N-vinyl hydrolidone | 10.0 | | 10.0 | 10.0 | 10.0 | 10.0 |
| (B1) N-vinyl caprolactam | | 10.0 | | | | |
| (C) IRGACURE 907 | 1.0 | 1.0 | 1.0 | 1.0 | 1.0 | 1.0 |
| (C) Lucirin TPO | 0.9 | 0.9 | 0.9 | 0.9 | 0.9 | 0.9 |
| (C) IRGACURE 184 | 1.0 | 1.0 | 1.0 | 1.0 | 1.0 | 1.0 |
| IRGANOX 245 | 0.3 | 0.3 | 0.3 | 0.3 | 0.3 | 0.3 |
| (D) FM0411 | 0.5 | 0.5 | 0.5 | 0.5 | 0.5 | 0.5 |
| (D) SH28PA | 0.03 | 0.03 | 0.03 | 0.03 | 0.03 | 0.03 |
| (D) SH-190 | 0.07 | 0.07 | 0.07 | 0.07 | 0.07 | 0.07 |
| Total | 103.9 | 103.8 | 102.9 | 103.1 | 103.9 | 103.9 |
| | | | | | | |
| Viscosity (Pa·s) @ 25 °C | 7.8 | 5.1 | 2.1 | 18.0 | 12.0 | 9.0 |
| Young's coefficient (MPs) | 400 | 520 | 180 | 2000 | 1400 | 620 |
| Break strength (MPa) | 49 | 47 | 30 | 48 | 38 | 48 |
| Total elongation (%) | 180 | 170 | 170 | 10 | 40 | 100 |
| Surface slipperiness (N/cm²) | 10 | 9 | 11 | 11 | 9 | 10 |
| Transparency (Hayes) (%) | 1.5 | 1.6 | 1.5 | >3 | >3 | 2.5 |

In Table 1:
IRGACURE 907: 2-methyl-1-[4-(methylthio)phenyl]-2-morpholino-propane-1-one (manufactured by Chiba Specialty Chemicals).
Lucirin TOP: 2,4,6-trimethyl benzoyl diphenyl phosphine oxide (manufactured by Chiba Specialty Chemicals).
IRGACURE 184: 1-hydroxy cyclohexylphenyl ketone (manufactured by Chiba Specialty Chemicals).
IRGANOX 245: Ethylene bis(oxiethylene) bis[3-(5-tert-butyl-4-hydroxy-m-tolyl)propionate] (manufactured by Chiba Specialty Chemicals).
FMO 411: Methyl polysiloxane polyoxialkylene copolymer with number-average molecular weight of 1170 g/mol (manufactured by Chisso Corporation).
SH28PA: Methyl polysiloxane polyoxialkylene copolymer with number-average molecular weight of 3770 g/mol (manufactured by Dow Coming Toray Co., Ltd.).
SH190: Methyl polysiloxane polyoxialkylene copolymer with number-average molecular weight of 1170 g/mol (manufactured by Dow Coming Toray Co., Ltd.).

As shown in Table 1, cured objects prepared from resin compounds according to the present invention as shown for each of the preferred embodiments had higher Young's coefficient and greater total elongation, as well as excellent surface slipperiness, and also excellent transparency. In contrast, Comparative Example 1, formed using urethane (meth)acrylate UA 2-1, which has structures derived from polyols having flexible structures but does not have structures derived from polyols having rigid structures, had insufficient Young's coefficients in the cured object. Comparative Example 2, formed using urethane (meth)acrylate UA 2-2, which has structures derived from polyols having rigid structures but does not have structures derived from polyols having flexible structures, had excessively high Young's coefficients and insufficient total elongation and transparency. Comparative Examples 3 and 4, formed by combining urethane (meth)acrylate UA 2-1 and urethane (meth)acrylate UA 2-2, had low total elongation and insufficient transparency. In Comparative Example 3, Young's coefficient was excessively high. Also, it was independently verified that elimination of component (D) from the compositions described in Comparative Examples 2 through 4 improved the transparency of the cured film, and therefore the cause of insufficient transparency in Comparative Examples 2 through 4 is considered to be insufficient solubility of component (D) in the cured film.

Cured objects formed from resin compositions according to the present invention are useful as outermost coating layers of optical fiber lines.

## Claims

1. A curable liquid resin composition for outermost covering layers of optical fiber line, comprising, of 100 wt.% total mass, the following components (A), (B), (C), and (D):
(A) 30-90 wt.% urethane (meth)acrylates having structures derived from polyols having aliphatic structures as well as structures derived from polyols having aromatic structures or alicyclic structures, and;
(B) 1-60 wt.% compounds other than urethane (meth)acrylate having ethylene unsaturated radicals, and;
(C) 0.1-10 wt.% polymerization initiator, and;
(D) 0.1-10 wt.% silicone compounds having number-average molecular weight of 1000 to 30 000 g/mol.

2. A curable liquid resin composition for outermost covering layers of optical fiber line according to claim 1, wherein the molar ratio of structures derived from polyols having aliphatic structures to structures derived from polyols having aromatic structures or alicyclic structures according to component (A) is 0.5:2 to 2:0.5.

3. A curable liquid resin composition for outermost covering layers of optical fiber line according to claim 1 or 2, wherein in component (A), polyols having aliphatic structure have molecular weight 700 to 2000 g/mol, and polyols having aromatic structures or alicyclic structures have molecular weight 300 to 1000 g/mol.

4. A curable liquid resin composition for outermost covering layers of optical fiber line according to any one of claims 1-3, wherein in component (A), polyols having aliphatic structures are ether polyols.

5. A curable liquid resin composition for outermost covering layers of optical fiber line according to any one of claims 1-4, wherein in component (A), polyols having aromatic structure or alicyclic structure are polyols having bisphenolic structure.

6. A curable liquid resin composition for outermost covering layers of optical fiber line according to any one of claims 1-5, wherein component (B), of 100 wt.% total mass of compounds other than urethane (meth)acrylate having ethylene unsaturated radicals, is no less than 90 wt.% (B1) polymerizable monofunctional compounds.

7. A curable liquid resin composition for outermost covering layers of optical fiber line according to any one of claims 1-6, wherein in component (D), silicone compounds of average molecular weight 1000 to 30 000 g/mol are silicone compounds having dimethyl polysiloxane structure.

8. An outer coating for optical fiber lines obtained by curing a curable liquid resin composition according to any one of claims 1-7.

9. An optical fiber line having an outer coating according to claim 8.
